# EUROPEAN PATENT APPLICATION

(11) **EP 2 393 256 A1**
(43) Date of publication of application: **07.12.2011**
(21) Application number: 11004115.9
(22) Date of filing: 18.05.2011
(51) Int. Cl.: H04L 29/06

(54) **Method and system for content filtering in a broadband gateway**

(30) Priority: 04.06.2010 US 351696 P; 30.12.2010 US 982223
(71) Applicant: Broadcom Corporation, Irvine, CA 92617 (US)
(72) Inventor: Lundgren, David, Mill Valley CA 94941 (US); Karaoguz, Jeyhan, Irvine CA 90602 (US); Chen, Xuemin, Irvine CA 92617 (US); Diab, Wael Willliam, San Francisco CA 94109 (US); Garrett, David, Tustin CA 92782 (US); Prodan, Rich, Niwot CO 80503 (US)
(74) Representative: Jehle, Volker Armin

(57) **Abstract**

Aspects of a method and system for content filtering in a broadband gateway are provided. In this regard, a broadband gateway may be operable to determine whether to allow access to content based on attributes of the content and based on one or more of: which of a plurality of electronic devices is attempting to access the content, sensor information identifying a user attempting to access the content, and a time at which a user is attempting to access the information. Attributes of the content may be determined by analyzing the content utilizing one or more pattern recognition techniques. The gateway may be operable to allow a first subset of the electronic devices to access the content during a first period of time, and allow a second subset of the electronic devices to access the content during a second period of time.

## Description

This patent application makes reference to, claims priority to and claims benefit from United States Provisional Patent Application Serial No. 61/351,696 filed on June 4, 2010.

The above stated application is hereby incorporated herein by reference in its entirety.

### FIELD OF THE INVENTION

Certain embodiments of the invention relate to a broadband gateway. More specifically, certain embodiments of the invention relate to a method and system for content filtering in a broadband gateway.

### BACKGROUND OF THE INVENTION

With the continuous growth of digital television or broadcast multimedia, and/or broadband access, which may be used in conjunction with online businesses, social networks, and/or other online services and applications, users may desire having access to a larger number of providers and/or a broader range of content in a manner that is flexible and/or suits the users' lifestyles. Most users connect to the Internet using web browsers running on personal computers (PCs). Furthermore, most households may have one or more televisions that may be used to view television and/or multimedia broadcasts. Television broadcasts may include terrestrial TV, Cable-Television (CATV), satellite TV and/or Internet Protocol television (IPTV) based broadcasts. To ensure against unauthorized reception and/or use of TV and/or multimedia broadcast, service providers may require use of dedicated set-top boxes (STBs) that may be used to encrypt broadcast signals communicated from the service providers to generate suitable video and/or audio streams that may be played via televisions and/or other display/playback devices in the household. Furthermore, STBs and/or TVs may support Internet access. Thus, rather than using a computer to access the Internet, a user may find it more convenient to use the flat screen televisions and/or monitors in homes for the same purpose. To do so, for example, an STB connected to a flat screen television may be provided with web browsing software and protocols, and Internet connectivity, which may enable the user to easily access the Internet or check their electronic mail (email), for example, from a convenient and comfortable location such as their living room.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for content filtering in a broadband gateway, substantially as illustrated by and/or described in connection with at least one of the figures, as set forth more completely in the claims.

According to an aspect, a method for networking is provided, the method comprising:
in a broadband gateway that enables communication with a plurality of electronic devices, wherein said broadband gateway is operable to handle at least one physical layer connection to at least one corresponding network access service provider:
   analyzing audio and/or video content handled by said broadband gateway to determine attributes of said audio and/or video content;
   determining whether to allow access to said audio and/or video content based on said determined attributes of said audio and/or video content and based on one or more of:
      which of said plurality of electronic devices coupled is attempting to access said audio and/or video content;
      sensor information identifying a user attempting to access said audio and/or video content; and
      a time at which a user is attempting to access said audio and/or video content.
Advantageously, said at least one physical layer connection comprises a plurality of physical layer connections and said at least one corresponding network access service provider comprises a plurality of corresponding access service providers, and wherein each of said plurality of physical layer connections corresponds to a respective one of said plurality of corresponding access service providers.
Advantageously, the method further comprises determining said attributes of said audio and/or video content by analyzing one or more audio tracks, files, or streams associated with said audio and/or video content utilizing one or more pattern recognition algorithms.
Advantageously, the method further comprises determining said attributes of said audio and/or video content by analyzing one or more video tracks, files, or streams associated with said audio and/or video content utilizing one or more pattern recognition algorithms.
Advantageously, the method further comprises determining said attributes of said audio and/or video content by analyzing a closed-captioning track or file associated with said audio and/or video content.
Advantageously, said sensor information comprises one or more of:
a biometric information for said user;
a picture of said user provided by a camera coupled to said broadband gateway; and
vocal input from a microphone coupled to said broadband gateway.
Advantageously, the method further comprises:
allowing a first subset of said plurality of electronic devices to access said audio and/or video content during a first period of time; and
allowing a second subset of said plurality of electronic devices to access said audio and/or video content during a second period of time, where said first period of time and said second period of time overlap or are mutually exclusive.
Advantageously, the method further comprises limiting a volume and/or frequency range at which one or more of said electronic devices are enabled to present audio portions of said audio and/or video content during determined periods of time.
Advantageously, the method further comprises determining whether to allow access to said audio and/or video content based on past determinations of whether to allow access to similar content.
Advantageously, the method further comprises sending an authorization request to a first one of said plurality of electronic devices upon receiving a request for said audio and/or video content from a second one of said plurality of electronic devices.
Advantageously, the method further comprises:
allowing said second one of said plurality of electronic devices to access said audio and/or video content upon receiving approval from said first one of said plurality of electronic devices; and
preventing said second one of said plurality of electronic devices from accessing said audio and/or video content upon receiving denial from said first one of said plurality of electronic devices.
According to an aspect, a system for networking comprises:
one or more circuits for use in a broadband gateway that enables communication with a plurality of devices, said one or more circuits being operable to:
   handle at least one physical layer connection to at least one corresponding network access service provider;
   analyze audio and/or video content handled by said broadband gateway to determine attributes of said audio and/or video content;
   determine whether to allow access to audio and/or video content based on said determined attributes of said content and based on one or more of:
      which of said plurality of electronic devices is attempting to access said audio and/or video content;
      sensor information identifying a user attempting to access said audio and/or video content; and
      a time at which a user is attempting to access said audio and/or video content.
Advantageously, said at least one physical layer connection comprises a plurality of physical layer connections and said at least one corresponding network access service provider comprises a plurality of corresponding access service providers, and wherein each of said plurality of physical layer connections corresponds to a respective one of said plurality of corresponding access service providers.
Advantageously, said one or more circuits and/or one or more circuits are operable to determine said attributes of said audio and/or video content by analyzing one or more audio tracks, files, or streams associated with said audio and/or video content utilizing one or more pattern recognition algorithms.
Advantageously, said one or more circuits and/or one or more circuits are operable to determine said attributes of said audio and/or video content by analyzing one or more video tracks, files, or streams associated with said audio and/or video content.
Advantageously, said one or more circuits and/or one or more circuits are operable to determine said attributes of said audio and/or video content by analyzing a closed-captioning track, file, or stream associated with said audio and/or video content.
Advantageously, said sensor information comprises one or more of:
biometric information for said user;
a picture of said user provided by a camera coupled to said broadband gateway; and
vocal input from a microphone coupled to said broadband gateway.
Advantageously, said one or more circuits and/or one or more circuits are operable to:
allow a first subset of said plurality of electronic devices to access said audio and/or video content during a first period of time; and
allow a second subset of said plurality of electronic devices to access said audio and/or video content during a second period of time, where said first period of time and said second period of time overlap or are mutually exclusive.
Advantageously, said one or more circuits and/or one or more circuits are operable to limit a volume and/or frequency range at which one or more of said electronic devices are enabled to present audio portions of said audio and/or video content during determined periods of time.
Advantageously, said one or more circuits and/or one or more circuits are operable to determine whether to allow access to said audio and/or video content based on past determinations of whether to allow access to similar audio and/or video content.
Advantageously, said one or more circuits and/or one or more circuits are operable to send an authorization request to a first one of said plurality of electronic devices upon receiving a request for said audio and/or video content from a second one of said plurality of electronic devices..
Advantageously, said one or more circuits and/or one or more circuits are operable to:
allow said second one of said plurality of electronic devices to access said audio and/or video content upon receiving approval from said first one of said plurality of electronic devices; and
prevent said second one of said plurality of electronic devices from accessing said audio and/or video content upon receiving denial from said first one of said plurality of electronic devices.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary communication system that comprises a home network serviced by a broadband gateway, in accordance with an embodiment of the invention.

FIG. 2 is a block diagram illustrating an exemplary broadband gateway, in accordance with an embodiment of the invention.

FIG. 3 is a flowchart illustrating exemplary steps for controlling access to content in a broadband gateway, in accordance with an embodiment of the invention.

FIG. 4 is a flowchart illustrating exemplary steps for restricting presentation of content via a broadband gateway, in accordance with an embodiment of the invention.

FIG. 5 is a flowchart illustrating exemplary steps for controlling a first device's access to content based on approval or denial from a second device, in accordance with an embodiment of the invention.

### DETAILED DESCRIPTION OF THE INVENTION

Certain embodiments of the invention may be found in a method and system for content filtering in a broadband gateway. In various embodiments of the invention, a broadband gateway may be operable to determine whether to allow access to content based on attributes of the content and based on one or more of: which of a plurality of electronic devices is attempting to access the content, sensor information identifying a user attempting to access the content, and a time at which a user is attempting to access the information. Attributes of the content may be determined by processing one or more audio tracks or files associated with the content utilizing one or more pattern recognition algorithms. Attributes of the content may be determined by processing one or more video tracks or files associated with the content utilizing one or more pattern recognition algorithms. Attributes of the content may be determined by analyzing a closed-captioning track or file associated with the content. The sensor information may comprise one or more of: a picture of the user provided by a camera coupled to the broadband gateway, vocal or audio input from a microphone coupled to the broadband gateway, a fingerprint of the user, or information from any other biometric scanner which may be utilized to determine identity.

The gateway may be operable to allow a first subset of the electronic devices to access the content during a first period of time, and allow a second subset of the electronic devices to access the content during a second period of time. The two periods of time may overlap or may be mutually exclusive. The gateway may be operable to limit a volume at which one or more of the electronic devices are enabled to present audio portions of the content during determined periods of time. The gateway may be operable to determine whether to allow access to the content based on past determinations of whether to allow access to similar content. The gateway may be operable to send an authorization request to a first one of the electronic devices upon receiving a request for the content from a second one of the electronic devices. The gateway may be operable to allow the second one of the electronic devices to access the content upon receiving approval from the first one of the electronic devices. The gateway may be operable to prevent the second one of the electronic devices from accessing the content upon receiving a denial from the first one of the electronic devices.

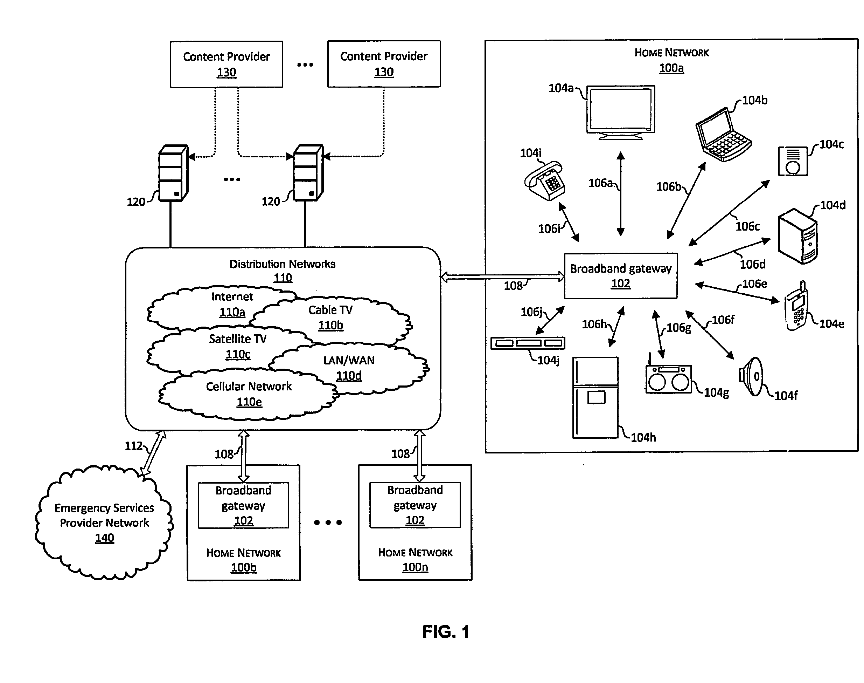

FIG. 1 is a block diagram illustrating an exemplary communication system that comprises a home network serviced by a broadband gateway, in accordance with an embodiment of the invention. Referring to FIG. 1, there is shown a home network 100a, a plurality of distribution networks 110, a plurality of service providers 120, and a plurality of content providers 130. The home network 100A may be serviced by a broadband gateway 102. Also shown in FIG. 1 are additional home networks 100b, ..., 100n, and an emergency services provider network 140. Each of the home networks 100b, ..., 100n may also be serviced by a broadband gateway 102.

The service providers 120 may comprise various entities which may provide various services to the devices 104 via the gateway 102 and/or to the gateway 102 itself. Some of the service providers 120 may comprise network access service providers which provide physical layer connections to the gateway 102. Such physical layer connections may then be utilized to access, and/or may be part of, the distribution networks 110. In this regard, "network access service provider" as utilized herein, is distinguished from the more generic term "service provider" which may encompass services other than providing physical layer access to a network. Cable television providers, plain old telephone service (POTS) providers, digital subscriber line (DSL) providers, cellular providers, WiMAX providers, and satellite providers are examples of network access service providers.

The content providers 130 may generate, capture, and/or package content, such as multimedia content, that may be distributed to end-users. The content may comprise, for example, audio, video, e-book, gaming, and/or other content. The content may be, for example, downloadable and/or streaming, rented and/or purchased. In some instances, a content provider and a service provider may be separate. In some instances, a single provider may provide both content and services. For example, an entity that functions as a network access service provider may also provide content and/or services other than network access and, thus, that entity may also be accurately referred to as a "content provider" and/or a "service provider." Content and/or services that are provided by a content provider 130 and/or a service provider 120 may be provided to the gateway 102 via a physical connection provided by a network access service provider 120.

The plurality of distribution networks 110 may comprise one or more networks that may be operable to enable wireless and/or wired communication among a plurality of entities based on one or more networking and/or communication infrastructures. In this regard, the plurality of distribution networks 110 may be utilized to enable distributing multimedia content generated by the content providers 130, directly and/or via the service providers 120, to end-users. The network connectivity available via the plurality of distribution networks 110 may be based on one or more communication standards and/or protocols. The plurality of distribution networks 110 may comprise, for example, the Internet 110a, a CATV network 110b, a satellite television (TV) network 110c, a wireless local area network/wide area network (LAN/WAN) 110d, and/or a cellular network 110e.

The Internet 110a may comprise a system of interconnected networks to enable exchange of data between a plurality of nodes, based on one or more networking standards, including, for example, the Internet Protocol (IP). For example, the Internet 110a may enable connectivity among a plurality of private and public, academic, business, and/or government nodes and/or networks. The physical connectivity may be provided in the Internet 110a via, for example, the Public Switched Telephone Network (PSTN), copper wires, fiber-optic cables, wireless interfaces, and/or other protocols and/or standards-based interfaces. The transport functionality may be performed in the Internet 110a based on, for example, one or more protocols, such as the Transmission Control Protocol/IP (TCP/IP), for example. The CATV network 110b may comprise suitable distribution nodes, systems, and/or subnetworks that may enable forwarding of communication between CATV providers and a plurality of cable-TV consumers. For example, the CATV network 110b may comprise a network of fiber optics and/or coaxial cables for use in CATV broadcasts. The satellite TV network 110c may comprise suitable distribution nodes, systems, and/or subnetworks that may enable communication of satellite TV broadcast by satellite TV providers to a plurality of consumers. For example, the satellite network 110c may comprise a plurality of orbiting satellite nodes and/or one or more terrestrial centers in a satellite-TV system.

The LAN/WAN network 110d may comprise suitable logic, circuitry, interfaces, and/or code that may be operable to enable implementation of one or more wired and/or wireless LAN or WAN standards and/or protocols. Exemplary WAN technologies comprise, for example, WiMAX-based networks. Exemplary LAN technologies may comprise, for example, those based on IEEE 802.11 standards, including, for example, WiFi-based networks. The cellular network 110e may comprise suitable logic, circuitry, interfaces and/or code that may be operable to enable communication via one or more cellular technologies. Exemplary cellular technologies may comprise Code Division Multiple Access (CDMA), wideband CDMA (WCDMA), CDMA1000, High-Speed Downlink Packet Access (HSDPA), Global System for Mobile Communications (GSM), General Packet Radio Services (GPRS), Enhanced Data Rates for Global Evolution (EDGE), and/or Universal Mobile Telecommunication System (UMTS). The cellular network 110e may comprise, for example, a plurality of control and/or switching nodes, and a plurality of base stations that enable transmission and/or reception of cellular based communications between the cellular network 110e and cellular capable devices.

The home network 100a may correspond to a location that may comprise a plurality of devices 104 which may be serviced and/or managed by the broadband gateway 102. In this regard, the location may be a residence (e.g., home, apartment), a small business, a school, a library, and/or other like settings in which users may want to obtain access to service and/or to content provider networks. The broadband gateway 102 may be utilized in the home network 100a to provide connectivity between the home network 100a and the service providers 120 (and/or the content providers 130) via the distribution networks 110.

The broadband gateway 102 may comprise suitable logic, circuitry, interfaces, and/or code that may be operable to provide connectivity between one or more devices in a home network, such as the home network 100a, and a plurality of external networks. For example, the broadband gateway 102 may handle a plurality of broadband physical layer connections 108 to the distribution networks 110. The broadband physical layer connections 108 may comprise wired, optical, and/or wireless connections between the broadband gateway 102 and the distribution networks 110, which may enable communication between the broadband gateway 102 and the service providers 120. The broadband gateway 102 may operate as an interface device that may allow one or more service and/or content providers to interact with various devices in the home network. In this regard, the broadband gateway 102 may be operable to perform and/or provide various services that may pertain to enabling and/or facilitating reception of content from one or more content providers, wherein the content may be delivered through one or more services providers. For example, the broadband gateway 102 may be operable to perform such operations as network access related processing (e.g., PHY/MAC, transport layer processing), encryption and/or decryption, user and/or account authentication, and/or at least some of video and/or audio processing operations that may be needed for consumption of multimedia content. The broadband gateway 102 may communicate with various devices in the home network 100, using wired and/or wireless communication links.

A single gateway 102 may be operable to handle multiple physical layer (i.e., layer 1 of the open-systems interconnection model (OSI)) connections 108 to multiple ones, or portions, of the distribution networks 110, where different ones or portions of the distribution network(s) 110 are owned, operated, leased, or otherwise associated with different network access service providers 120. For example, a first network access service provider 120 may provide network access to the gateway 102 via a DSL connection over twisted-pair cabling, and a second network access service provider 120 may provide network access to the gateway 102 via a cable television connection over coaxial cabling. In some instances, the gateway 102 may be operable to concurrently communicate over multiple physical layer connections provided by multiple network access service providers.

The broadband gateway 102 may also be operable to provide and/or support various other, non-content related services in the home network 100. For example, the broadband gateway 102 may be operable to provide energy management in the home network 100a, by controlling and/or adjusting configuration of one or more devices in the home network to reduce power consumption for example.

Devices serviced by, and/or connected with the broadband gateway 102 may comprise content consuming devices and/or other, non-content consuming household or home devices that may be operable to interact with the broadband gateway 102. For example, the broadband gateway 102 may service, and/or may communicate with a plurality of home devices 104a-104j in the home network 100a. The home devices may comprise, for example, one or more of a television 104a, a laptop computer 104b, a smoke detector, a carbon monoxide detector, and/or a security alarm 104c, a computer and/or server 104d, a mobile phone 104e, a speaker 104f, an AM/FM radio 104g, a phone 104h, an appliance 104i (e.g., refrigerator), and a digital video recorder (DVR) or personal video recorder (PVR) 104j. The broadband gateway 102 may interact with each of the home devices 104a-104j via links 106a-106j, which may be supported by the broadband gateway 102 and the corresponding home device. For example, the link 106a between the broadband gateway 102 and the television 104a may comprise a High-Definition Multimedia Interface (HDMI) cable. The link 106b may comprise, for example, a wired Ethernet link, a wireless Ethernet link, a Universal Serial Bus (USB) link, or an IEEE 1394 link. The link 106c may comprise, for example, a two-wire link or a wireless link. The link 106d may comprise, for example, a wired Ethernet link, a wireless Ethernet link, a USB link, or an IEEE 1394 link. The link 106e may comprise, for example, a wireless Ethernet link, a USB link, or a cellular link. The link 106f may comprise speaker wire and/or a wireless link. The link 106g may comprise, for example, AM and/or FM radio transmissions broadcast received using the broadband gateway 102. The link 106h may comprise, for example, a phone line. The link 106i may comprise, for example, a wired or wireless Ethernet link. The link 106j may comprise, for example, a wired or a wireless link.

As illustrated in FIG. 1, a plurality of home networks 100b, ..., 100n, may also be connected to the distribution networks 110. These home networks 100b, ... , 100n may operate in substantially the same manner as the home network 100a. By having multiple home networks connected to the distribution networks 110, various applications, such as peer-to-peer communication and/or data aggregation operations may be possible by utilizing the broadband gateways 102 in the home networks.

The broadband gateway 102 may also provide emergency-related services in the home network 100a. For example, the emergency services provider network 140 may be connected to the distribution networks 110 via a link 112. The emergency services provider network 140 may be associated with one or more emergency service provider entities. For example, a public entity such as a 911 center and/or a private entity such as a security company may be able to interact with the broadband gateway 102 in the home network 100a via the distribution networks 110.

In operation, one or more of the devices 104a - 104j may request that content be delivered to it via the gateway 102. The gateway 102, before requesting the content from the content provider(s) 130 and/or before allowing the requesting device 104 to access the content, may determine whether the request should be granted. The gateway 102 may make such a determination based on one or more of: attributes of the requested content, attributes of the device requesting the content, attributes of a user requesting the content, or a time at which the content is requested. Past determinations regarding similar content may also factor into a determination of whether to allow access to the content.

Attributes of the content may comprise, for example, ratings assigned to the content by one or more regulatory bodies, agencies, or interest groups, by administrators of the gateway 102, by users of the requesting device 104 and of other ones of the devices 104a - 104j. Additionally or alternatively, attributes of the content may comprise, for example, whether the content contains vulgarity, violence, or nudity. The content may comprise one or more audio tracks or files, one or more video tracks or files, and/or one or more image files. In such instances, various attributes of the content may be determined by, for example, analyzing such tracks or files utilizing pattern recognition algorithms. For example, text which would appear on screen during presentation of the content may be analyzed utilizing an optical character recognition (OCR) algorithm. For another example, speaking content which would be presented via a speaker during presentation of the content may be analyzed using a speech recognition algorithm. The content may comprise one or more tracks or files, such as a closed-captioning track, which may comprise text in, for example, UNICODE format. In such instances, various attributes of the content may be determined by, for example, analyzing the text.

Attributes of the device requesting the content may comprise, for example, one or more of: a location of the requesting device 104, users associated with the requesting device 104, or capabilities of the device. A location of the requesting device 104 may comprise, for example, which building and/or room the device is in. Users associated with the requesting device 104 may comprise, for example, whether children or people without the proper security credentials have access to the requesting device 104. Capabilities of the requesting device 104 may comprise, for example, audio formats, video formats, and/or file types that are supported by the requesting device 104.

Attributes of a user requesting the content may comprise, for example, demographic information such as age, ethnicity, religion, place of residence, whether the user is a parent, and whether the user is a child. In this regard, user profiles associated with users of the devices 104 may be stored in the gateway 102. The gateway 102 may determine a user requesting the content based on one or more sensors which may be one of, or part of, the devices 104 and/or the gateway 102. The gateway 102 and/or one or more of the devices 104 may, for example, comprise a fingerprint scanner. The gateway 102 may, for example, comprise a camera and/or one or more of the devices 104 may comprise a camera, and the gateway 102 may be operable to analyze an image from the camera to perform facial recognition. The gateway 102 may, for example, comprise a microphone and/or one or more of the devices 104 may comprise a microphone, and the gateway 102 may be operable to perform voice recognition.

The gateway 102 may restrict access to content based on the time at which the content is requested. For example, the devices 104 may comprise a home theater with a powerful audio system and the gateway 102 may prevent audio content from being delivered to a loud audio system late at night. Additionally or alternatively, the gateway 102 may allow audio content to be delivered to the home theater late at night but may limit the volume at which the audio content may be consumed and/or present a warning to the user regarding potential disturbance of family and/or neighbors. Restrictions, such as volume restrictions on multimedia content may be user configurable based on, for example, the type and/or source of the content, the device via which the content is consumed, and the user consuming the content. For example, a parent may configure the gateway 102 to restrict loud media consumption by children.

. For example, the gateway 102 may allow mid-range and high-frequency audio channels to be delivered to the home theater but may prevent a low frequency channel from being delivered to a subwoofer.

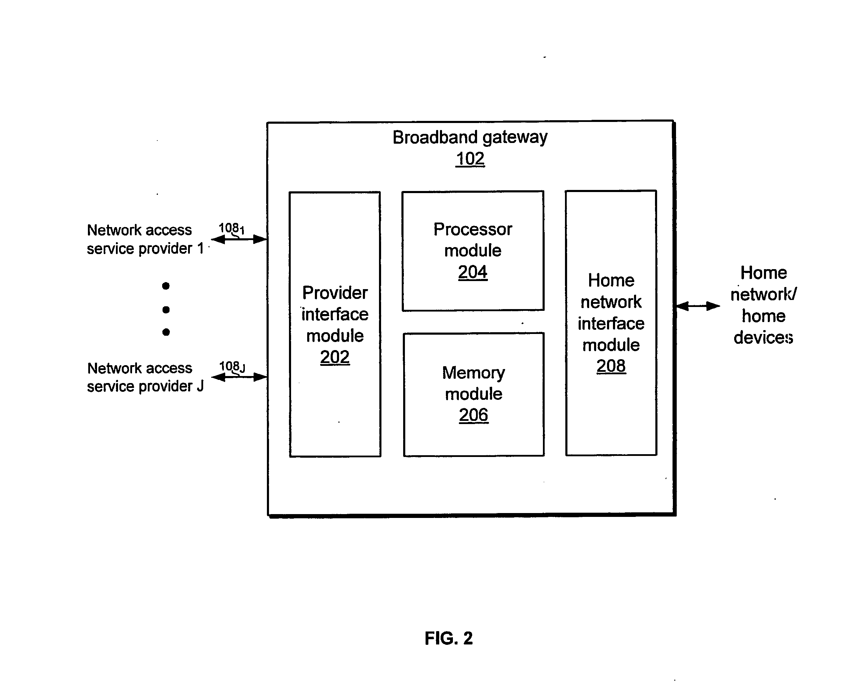

FIG. 2 is a block diagram illustrating an exemplary broadband gateway, in accordance with an embodiment of the invention. Referring to FIG. 2, the broadband gateway 102 may comprise suitable logic, circuitry, code, and/or interfaces that may be operable to provide connectivity between one or more networks, such as the distribution networks 110 shown in FIG. 1, for example, and one or more devices in a home network, such as the home devices 104a-104j in the home network 100a shown in FIG. 1. In this regard, the broadband gateway 102 may operate as an interface device that allows one or more devices in the home network to access one or more networks, and to access various services and/or content via those one or more networks. For example, the broadband gateway 102 may be utilized to enable interaction between the plurality of service providers 120 and/or the plurality of content providers 130, and the home devices 104a-104j.

The broadband gateway 102 may communicate with the various devices via a home network that may comprise wired and/or wireless communication links, such as the home network 100a. In this regard, the broadband gateway 102 may comprise suitable hardware and/or software to provide some or all of the functions and/or operations of one or more of a modem, a router, and a switch. The modem functions and/or operations may be those of a digital subscribed line (DSL) modem, a cable modem, or a wireless cable modem, for example. The router functions and/or operations may be those of a wireless router, for example. The switch functions and/or operations may be those of a network switch, or a local area network (LAN) switch, for example. In some instances, the broadband gateway 102 may communicate with the various devices in the home via more than one home network.

The broadband gateway 102 may comprise one or more modules. Each of these modules may comprise hardware, software, or a combination thereof that may be utilized to perform various operations associated with the broadband gateway 102. In an embodiment of the invention, the broadband gateway 102 may comprise a provider interface module 202, a processor module 204, a memory module 206, and a client network interface module 208. In some instances, the broadband gateway 102 may be such that the various modules listed above may be distributed over multiple devices. Moreover, the modules listed above are provided by way of illustration and not of limitation. Other configurations and/or architectures of the broadband gateway 102 may also be implemented. For example, the broadband gateway 102 may be a virtual gateway that is setup in a network by utilizing virtual machines (VMs) and/or next-generation (NG) data centers.

The provider interface module 202 may comprise suitable logic, circuitry, code, and/or interfaces that may be operable to receive data from and/or send data to one or more service/content providers via one or more physical layer connections 108 to one or more network access service providers. In this regard, each of the physical layer connections 108₁ - 108_{J} may connect the gateway 102 to a difference network access service provider. Each of the physical layer connections 108 may comprise a wired, optical, or wireless connection. Each of the physical layer connections 108 may utilize different physical media and/or different physical layer protocols. For example, the connection 108₁ may comprise a DSL over twisted-pair connection and the connection 108ⱼ may comprise a CATV over coaxial cable connection.

The processor module 204 may comprise suitable logic, circuitry, code, and/or interfaces that may be operable to process data received from the service/content providers and/or data received from one or more devices 104 in the home. Data received from the service/content providers via one or more the physical layer connections 210₁ - 210_{J} of may be processed to make it suitable for communication to a device 210 and data from the one or more devices 210 may be processed to make it suitable for communication to the service/content providers via one or more the physical layer connections 210₁ - 210_{J}. In this regard, the processor module 204 may comprise one or more portions that are suitable to handle certain types of data such as video data and/or audio data, for example. The processor module 204 may also be operable to generate a graphical user interface (GUI) which may be manipulated via which a user may provide input. The GUI may be displayed as part of an OSD on a local device 104, such as a monitor or television, and may be manipulated via a remote control and/or other input device that communicates directly with the gateway 102. The GUI may be a web-based interface, and a user may interact with it via a computer and web browser. The GUI may be customized based on characteristics of the gateway 102, the device 104 coupled to the gateway, and the service and/or content providers associated with the gateway 102. The processors module 204 may utilize the memory 206 in performing its functions.

The memory module 206 may comprise suitable logic, circuitry, code, and/or interfaces that may be operable to store data utilized in the operations of the broadband gateway 102. For example, the memory module 206 may be utilized to store configuration data, parameters, device information, tracking and/or monitoring information, security information, and intermediate processing data, for example. The memory module 206 may comprise storage media that may be integrated in the broadband gateway 102 and/or may be removable such as a removable storage device.

The client network interface module 208 may comprise suitable logic, circuitry, code, and/or interfaces that may be operable to receive data from and/or send data to one or more devices in the home network. The client network interface module 208 may be operable to support multiple communication protocols, standards, and/or data transport technologies. In this regard, the client network interface module 208 may handle one or more physical layer connections to one or more devices 104. For example, the client network interface module 208 may comprise, one or more wired and/or wireless Ethernet interfaces, one or more analog and/or digital audio outputs, one or more audio/video interfaces such as such as HDMI and DisplayPort, one or more USB interfaces, one or more IEEE 1394, and/or one or more telephone jacks.

The broadband gateway 102 may be operable to provide energy management by varying the configuration of one or more devices in the home network. The broadband gateway 102 may collect and/or store energy-related information of the devices in the home network and/or of the links in the home network, and may utilize such information to control the operation of the home devices. For example, the broadband gateway 102 may utilize channel capacity flexibility and content coding options to minimize and/or optimize power utilization. The broadband gateway 102 may also configure and/or manage the configuration of the network between the broadband gateway 102 and one or more service/content providers based on the energy-related information associated with the devices in the home. For example, at least a portion of the distribution networks 100 may be configured and/or managed in this manner. The broadband gateway 102 may be utilized to display energy-related metrics, including consumption trends and/or costs, for example, and to display any available credits/rewards that may be redeemed by a user. In some instances, when a device in the home network is a certified device, such as a California efficient display, for example, the broadband gateway 102 may be utilized to provide that information to a service/content provider and obtain rewards/credits associated with the use of such certified devices. Moreover, overall network power consumption may be managed by sharing information among multiple interconnected broadband gateways.

The broadband gateway 102 may be operable to adapt and/or enable changes in a subscription model and/or in multimedia delivery characteristics based on the capabilities of the various devices in the home network. For example, high-definition video content may be delivered to certain type of devices, such as digital televisions (DTVs), while low-definition video content and/or text may be delivered to a different type of devices, such as personal mobile devices. In this regard, the broadband gateway 102 may be utilized to reduce bandwidth and/or processing power consumption in the home network. The broadband gateway 200 may also support and/or use multi-transport processing, which may be performed sequentially, in parallel, and/or utilizing distributed processing.

The gateway functionality associated with a user, such as security features, preferences, applications, electronic programming guides (EPGs), and user profile, for example, may be ported from the broadband gateway 102 to one or more other broadband gateways 102 in other locations. In some instances, a visitor may be allowed access to their content outside their service/content provider service area by, for example, classifying the access level for different users and/or by providing limited access to content. Moreover, the broadband gateway 102 may allow multiple user interface software structures by, for example, standardizing an interface to service/content providers and devices in the home network.

The broadband gateway 102 may be operable to broker and/or arbitrate with service/content providers the consumption of certain services, such as music and video, for example. In some instances, the broadband gateway 102 may perform content search, transport discovery, ranking, and/or sorting. These operations may be performed based on content quality, price, quality-of-service (QOS), and network protocols supported by the devices in the home network, such as service level agreements (SLAs), for example.

Various emergency-related services in the home network may be supported by the broadband gateway 102, including allowing first responders to provide alerts to a select group of users by accessing the broadband gateway 102 via secure links provided by the service/content providers. For example, the broadband gateway 102 may enable an emergency service provider, such as those associated with the emergency service provider network 140 described above in FIG. 1, to access one or more devices in the home network.

Customized graphical user interfaces (GUIs) may be generated by the broadband gateway 102, wherein the GUIs may be used to visually display and/or provide interaction with the customized content.

For peer-to-peer communication, the broadband gateway 102 may be utilized to allow enhanced content sharing in a service/content provider network. In this regard, the broadband gateway 102 may be utilized to construct a directory service for peer-to-peer connectivity with friends and family, for example. The broadband gateway 102 may be utilized to provide incentives to users who engage in peer-to-peer communication through, for example, the distribution networks 110. Moreover, the broadband gateway 102 may be utilized to match the content coding to the service type being consumed by the user and to make the necessary allocations through the network with respect to peer-to-peer or conventional Internet programming or broadcast programming.

The broadband gateway 102 may be utilized in connection with constrained network resources, such as time of day, traffic congestion, and the like, for example, to provide incentives for a user to accept a lower cost, lower quality of service that is dynamically configured for current network conditions. In some instances, the broadband gateway 102 may allow enhanced low latency service delivery to client devices in a home network.

The broadband gateway 102 may be operable to run or execute an agent to extract content, rating, copyright, language, privacy rules, and automatically add user generated content, for example. Such agent may be run or executed in connection with the processor module 204 of the broadband gateway 102, for example. In some instances, the broadband gateway 102 may be operable to provide rating-related information or channel prediction to a service/content provider to assist with fast channel change.

Bandwidth optimization by, for example, placing future requests for bandwidth to a service/content provider and accepting the best timeslots provided in return may be enabled by the broadband gateway 102.

The broadband gateway 102 may be operable to combine and/or blend multiple contents for use as single content in the home network. Such combination may be performed in one or more of the modules of the broadband gateway 102. For example, the broadband gateway 102 may blend different video and audio contents for an event by accessing one or more service/content providers and providing automatic and/or manual content synchronization.

The protection, management, and/or tracking of confidential data, such as health and financial records, for example, by tagging the data may be provided by the broadband gateway 102. Only when a user authorizes the transfer of the confidential data will such data be stored and/or aggregated. The broadband gateway 102 may be operable to create a trusted rating mechanism for content. The broadband gateway 102 may be secure against external threats that may be downloaded from outside the home network and may provide a secure domain distribution in the home network. Automated and secured billing and payment services may also be provided by the broadband gateway 102.

The broadband gateway 102 may be operable to utilize client or home device profile information to select layered video service(s) and/or transmission. Such information may be stored, at least temporarily, in the memory module 206 of the broadband gateway 102. In some instances, the programming and/or enhanced video layers received by the broadband gateway 102 may be aggregated midstream by one or more network or routing nodes.

The broadband gateway 102 may support a reduction in the cost of unwatched content by using multi-tier billing for downloaded content, such as video content. The broadband gateway 102 may be utilized to provide a unified payment portal for collecting and/or aggregating charges from multiple service and/or content providers.

In operation, a request for content may be received from a device 104 via the home network interface module 208 and the processor module 204 may determine whether to grant the request. In instances that the request is granted, the processor module 204 may then enable outputting the content to the requesting device 104 via the home network interface module 208. In some instances, the content may be stored in the memory module 206 and the processor module 204 may read the content from memory module 206, perform any necessary or optional processing of the content, and output the content via the interface 208. In some instances, the content may be stored in a device 104, such as a DVR, and the processor 204 may request the content from the DVR via the interface 208, perform any necessary or optional processing of the content, and deliver the content to the requesting device 104 via the interface 208. In some instances, the processor module 204 may send, via the provider interface module 202, a request to a content provider 130 that provides the content. The content may be received via the provider interface module 202, processed by the process module 204, and sent to the requesting device 104 via the interface 208.

In determining whether to grant the request for the content, the processor module 204 may process the content to determine various attributes of the content. Such processing may comprise analyzing audio, visual, and/or textual portions of the content utilizing pattern recognition techniques. In determining whether to grant the request for the content, the processor module 204 may determine attributes of the requesting device 104 by, for example, exchanging messages with the requesting device 104 via the interface module 208 and/or by looking up an identifier of the requesting device 104 in a device profile table stored in the memory module 206. In determining whether to grant the request for the content, the processor module 204 may determine attributes of the user of the requesting device 104 by, for example, requesting input from a sensor, processing the sensor input to identify the user, and then looking up a profile of the user stored in the memory module 206.

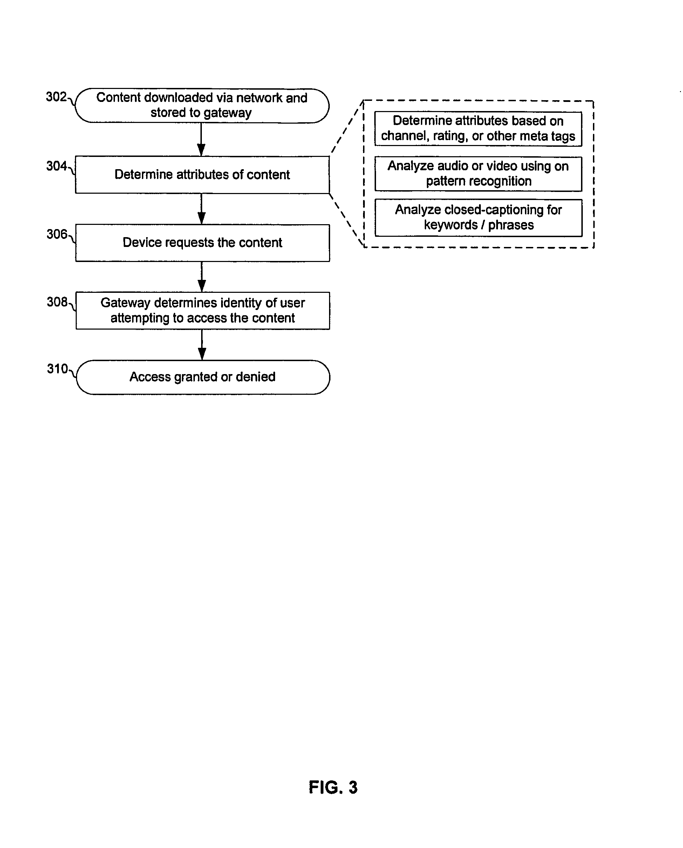

FIG. 3 is a flowchart illustrating exemplary steps for controlling access to content in a broadband gateway, in accordance with an embodiment of the invention. Referring to FIG. 3, the exemplary steps begin with step 302 in which content may be downloaded from a content provider 130 by the gateway 102 and stored or buffered in the memory module 206. In step 304, the gateway 102 may determine attributes of the content. The gateway 102 may determine the attributes of the content based on the content provider originating the content. In this regard, certain content providers may generate content of certain types and/or for certain audiences. The gateway 102 may determine the attributes of the content by analyzing audio tracks, files, or streams and/or video tracks, files, or streams of the content utilizing pattern recognition techniques. Additionally or alternatively, the gateway 102 may determine the attributes of the audio and/or video content by analyzing text files, such as a closed-captioning file, of the content. In various embodiments of the invention, audio and/or video content may be delivered as part of a packetized stream and metadata, such as TV parental guideline ratings, may be conveyed in headers or other control fields of the packet stream. Accordingly, the gateway 102 may be operable to determine attributes of the content by analyzing the audio and/or video content itself and/or by analyzing packet headers, tags, advisory codes, and/or other metadata delivered with the audio and/or video content.

In step 306, a device 104 may request the content downloaded in step 302. In step 308, the gateway 102 may determine the identity of the user requesting the content. In this regard, input from a sensor, such as a fingerprint scanner, a camera, or a microphone may be analyzed to determine the identity of the user. In step 310, the gateway 102 may determine whether to grant the request and output the content to the requesting device 104. The determination may be based on the determined attributes of the content, a user profile of the identified user, and/or attributes and/or capabilities of the requesting device 104.

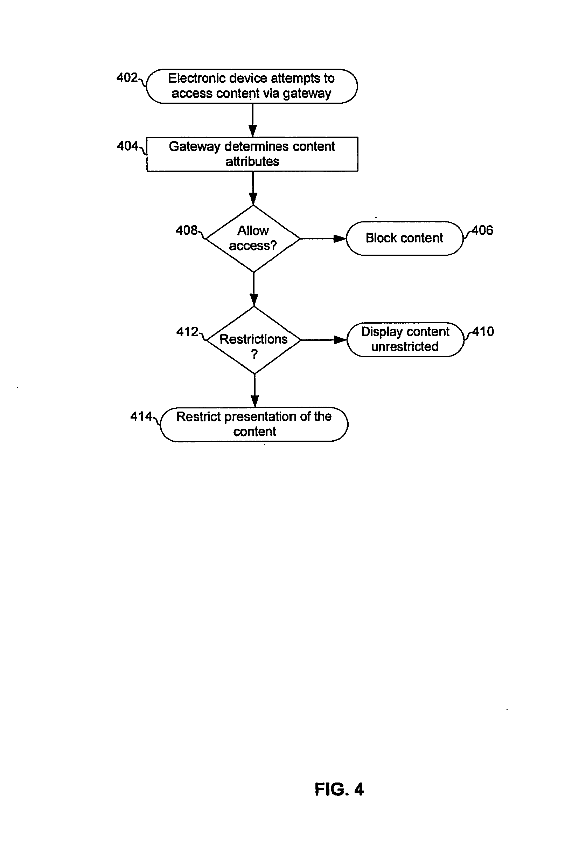

FIG. 4 is a flowchart illustrating exemplary steps for restricting presentation of content via a broadband gateway, in accordance with an embodiment of the invention. Referring to FIG. 4, the exemplary steps begin with step 402 in which a device 104 may request that content be delivered to it via the gateway 102. In step 404, the gateway 102 may determine attributes of the content. In step 408, the gateway 102 may determine whether to deliver the content to the requesting device 104 based on the attributes of the content, based on attributes of the requesting device, based on the time of day at which the content is being requested, and/or based on user-configured restriction settings. For example, if the content comprises music and/or other loud audio and the requesting device 104 comprises loud speakers, then in step 406, the gateway 102 may deny the request for the content if it is being requested late at night. In some instances, upon denying the devices request for the content, the gateway 102 may indicate which, if any, devices would be allowed to consume the content at that time. For example, content may be restricted to a small television or laptop computer late at night.

Returning, to step 408, if the gateway 102 does grant the request for the content, then in step 412, the gateway 102 may determine whether to restrict presentation of the content by the device 104. For example, in step 414, the gateway 102 may limit the volume at which audio content may be presented via the device 104 and/or may deliver only some of the audio channels to the device 104. Returning to step 412, if the gateway 102 decides that the content may be presented without restrictions, then the exemplary steps may advance to step 410. For example, if the content does not comprise audio and/or only contains vocal audio or mid-range and/or high-frequency audio that is unlikely to disturb neighbors, then the content may be presented without the gateway imposing limits on the volume beyond those naturally imposed by the capabilities of the gateway 102 and the device 104.

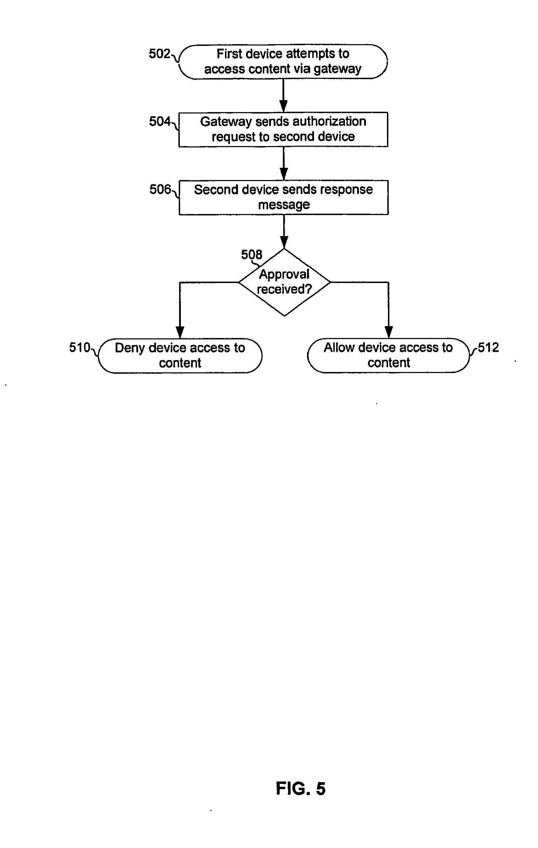

FIG. 5 is a flowchart illustrating exemplary steps for controlling a first device's access to content based on approval or denial from a second device, in accordance with an embodiment of the invention. Referring to FIG. 5, the exemplary steps begin with step 502 in which a first device 104 attempts to access content via the gateway 102. In step 504, the gateway 102 may send an authorization request to a second device 104. The authorization request may be sent based on, for example, attributes of the device that is requesting the content, attributes of the user that is requesting the content, the time at which the content is being requested. In this regard, rules for which devices and/or users need approval for which content may be stored in the gateway 102.

In step 506, the second device 104 may send a reply to the gateway 104. In step 508, if the reply approves of the first device 104 accessing the content, then the exemplary steps advance to step 512. If the reply disapproves of the first device 104 accessing the content, then the exemplary steps advance to step 510.

Various aspects of a method and system for content filtering in a broadband gateway are provided herein. In an exemplary embodiment of the invention, a broadband gateway 102 may be operable to determine whether to allow access to content based on attributes of the content and based on one or more of: which of a plurality of electronic devices 104 is attempting to access the content, sensor information identifying a user attempting to access the content, and a time at which a user is attempting to access the information. Attributes of the content may be determined by processing one or more audio tracks or files associated with the content utilizing one or more pattern recognition algorithms. Attributes of the content may be determined by processing one or more video tracks or files associated with the content utilizing one or more pattern recognition algorithms. Attributes of the content may be determined by analyzing a closed-captioning track or file associated with the content. The sensor information may comprise one or more of: a fingerprint of the user, a picture of the user provided by a camera coupled to the broadband gateway 102, and vocal input from a microphone coupled to the broadband gateway 102.

The gateway may be operable to allow a first subset of the electronic devices 104 to access the content during a first period of time, and allow a second subset of the electronic devices 104 to access the content during a second period of time. The two periods of time may overlap or may be mutually exclusive. The gateway 102 may be operable to limit a volume at which one or more of the electronic devices are enabled to present audio portions of the content during determined periods of time. The gateway 102 may be operable to determine whether to allow access to the content based on past determinations of whether to allow access to similar content. The gateway 102 may be operable to send an authorization request to a first one of the electronic devices 104 upon receiving a request for the content from a second one of the electronic devices 104. The gateway may be operable to allow the second one of the electronic devices 104 to access the content upon receiving approval from the first one of the electronic devices 104. The gateway 102 may be operable to prevent the second one of the electronic devices 104 from accessing the content upon receiving a denial from the first one of the electronic devices 104.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for content filtering in a broadband gateway.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for networking, the method comprising:
in a broadband gateway that enables communication with a plurality of electronic devices, wherein said broadband gateway is operable to handle at least one physical layer connection to at least one corresponding network access service provider:
analyzing audio and/or video content handled by said broadband gateway to determine attributes of said audio and/or video content;
determining whether to allow access to said audio and/or video content based on said determined attributes of said audio and/or video content and based on one or more of:
which of said plurality of electronic devices coupled is attempting to access said audio and/or video content;
sensor information identifying a user attempting to access said audio and/or video content; and
a time at which a user is attempting to access said audio and/or video content.

2. The method according to claim 1, wherein said at least one physical layer connection comprises a plurality of physical layer connections and said at least one corresponding network access service provider comprises a plurality of corresponding access service providers, and wherein each of said plurality of physical layer connections corresponds to a respective one of said plurality of corresponding access service providers.

3. The method according to claim 1, comprising determining said attributes of said audio and/or video content by analyzing one or more audio tracks, files, or streams associated with said audio and/or video content utilizing one or more pattern recognition algorithms.

4. The method according to claim 1, comprising determining said attributes of said audio and/or video content by analyzing one or more video tracks, files, or streams associated with said audio and/or video content utilizing one or more pattern recognition algorithms.

5. The method according to claim 1, comprising determining said attributes of said audio and/or video content by analyzing a closed-captioning track or file associated with said audio and/or video content.

6. The method according to claim 1, wherein said sensor information comprises one or more of:
a biometric information for said user;
a picture of said user provided by a camera coupled to said broadband gateway; and
vocal input from a microphone coupled to said broadband gateway.

7. The method according to claim 1, comprising:
allowing a first subset of said plurality of electronic devices to access said audio and/or video content during a first period of time; and
allowing a second subset of said plurality of electronic devices to access said audio and/or video content during a second period of time, where said first period of time and said second period of time overlap or are mutually exclusive.

8. The method according to claim 1, comprising limiting a volume and/or frequency range at which one or more of said electronic devices are enabled to present audio portions of said audio and/or video content during determined periods of time.

9. The method according to claim 1, comprising determining whether to allow access to said audio and/or video content based on past determinations of whether to allow access to similar content.

10. The method according to claim 1, comprising sending an authorization request to a first one of said plurality of electronic devices upon receiving a request for said audio and/or video content from a second one of said plurality of electronic devices.

11. The method according to claim 9, comprising:
allowing said second one of said plurality of electronic devices to access said audio and/or video content upon receiving approval from said first one of said plurality of electronic devices; and
preventing said second one of said plurality of electronic devices from accessing said audio and/or video content upon receiving denial from said first one of said plurality of electronic devices.

12. A system for networking, the system comprising:
one or more circuits for use in a broadband gateway that enables communication with a plurality of devices, said one or more circuits being operable to:
handle at least one physical layer connection to at least one corresponding network access service provider;
analyze audio and/or video content handled by said broadband gateway to determine attributes of said audio and/or video content;
determine whether to allow access to audio and/or video content based on said determined attributes of said content and based on one or more of:
which of said plurality of electronic devices is attempting to access said audio and/or video content;
sensor information identifying a user attempting to access said audio and/or video content; and
a time at which a user is attempting to access said audio and/or video content.

13. The system according to claim 12, wherein said at least one physical layer connection comprises a plurality of physical layer connections and said at least one corresponding network access service provider comprises a plurality of corresponding access service providers, and wherein each of said plurality of physical layer connections corresponds to a respective one of said plurality of corresponding access service providers.

14. The system according to claim 11, wherein said one or more circuits and/or one or more circuits are operable to determine said attributes of said audio and/or video content by analyzing one or more audio tracks, files, or streams associated with said audio and/or video content utilizing one or more pattern recognition algorithms.

15. The system according to claim 11, wherein said one or more circuits and/or one or more circuits are operable to determine said attributes of said audio and/or video content by analyzing one or more video tracks, files, or streams associated with said audio and/or video content.
